# EUROPEAN PATENT APPLICATION

(11) **EP 2 767 436 A2**
(43) Date of publication of application: **20.08.2014**
(21) Application number: 14155106.9
(22) Date of filing: 13.02.2014
(51) Int. Cl.: B60P 3/38

(54) **Bed arrangement in camper vehicle**

(30) Priority: 14.02.2013 GB 201302622
(71) Applicant: Lunar Caravans Ltd, Preston, Lancashire PR5 5JF (GB)
(72) Inventor: Mellor, Brian, Preston, Lancashire PR5 5JF (GB); Mellor, Darryl, Preston, Lancashire PR5 5JF (GB)
(74) Representative: Hutchinson, Thomas Owen

(57) **Abstract**

A camper vehicle (10) comprising a drivers' seat (18), a front passengers' seat (18) located adjacent to the drivers' seat (18), at least one rear passenger seat (20) located behind the drivers' seat (18) and the front passengers' seat (18), and an inflatable mattress (40) adapted to at least partially overlie and span, when inflated, the drivers' seat (18), the front passengers' seat (18) and the at least one rear passenger seat (20), wherein the rear passengers' seat or seats (20) is or are foldable to provide, and wherein the drivers' seat (18) and the front passengers' seat (18) are rotatable such that their seat portions provide, support surfaces for supporting the inflatable mattress (40).

## Description

This invention relates to vehicles, and in particular, but without limitation, to interior configurations of camping vehicles.

Camping vehicles are currently available in a number of established formats, namely caravans, which are accommodation units that can be towed behind a conventional road vehicle; and campervans, in which an accommodation unit is integrated into the vehicle itself. Both existing formats of camping vehicles offer advantages and disadvantages, as follows:
Caravans are generally considered to be versatile inasmuch as they allow the accommodation unit to be connected and disconnected from the towing vehicle at will, which means that the towing vehicle can be used independently when the accommodation unit is not required. As such, the towing vehicle can be used for everyday use, and the accommodation unit can be attached only when a user wishes, for example, to go on vacation, or to stay at a remote location overnight. When the campsite has been reached, the caravan can be disconnected from the towing vehicle enabling the user to utilise the towing vehicle by itself, for example, for day trips or regular use. Caravans, however, can be difficult to manoeuvre, especially when reversing, and there are practical limitations to the maximum safe towing speed of a caravan, especially on hilly or twisting roads. In addition, when a caravan is hitched to a towing vehicle, the towing vehicle's spare power and fuel economy reduces considerably, meaning that caravan users often purchase over-sized or over-powered vehicles for everyday use, so that they are able to safely tow a caravan when the need arises. The regular use of an over-sized or over-powered vehicle, when such is not necessary for the majority of the time, adversely affects the environment through over-use of fuel and excessive emissions/pollution, and can contribute to traffic congestion problems.

Campervans, on the other hand, are generally easier to manoeuvre and can be driven at higher speeds than caravans because the accommodation is rigidly integrated with the vehicle's chassis. In addition, the campervan's engine is usually appropriately-sized in relation to the size and weight of the vehicle, meaning that pollution and emissions are not generally excessive. However, campervans, owing to their size, are not suited to everyday use because of their size, and the fact, for example, that they are unable to enter certain car parks (parking lots) with height restrictions; and/or they cannot be parked/left on certain types of roads or laybys depending on local bye-law restrictions. Also, for everyday use, the size and fuel consumption of a campervan is usually considered excessive, meaning that the campervan owner is usually inclined to purchase a second vehicle for everyday use.

A need therefore exists for a hybrid type of camping vehicle, which overcomes the shortcomings outlined above of existing campervans and caravans, and which provides the convenience of vehicle that is suitable for everyday use, whilst also providing useful accommodation for overnight stays or day trips.

One possible solution to this problem is to provide a campervan that is based on a smaller vehicle system, such as a "people carrier" (MPV) or "minivan". However, smaller vehicles inevitably mean that compromises need to be made in terms of the amount of equipment and accommodation that can be incorporated into a smaller vehicle footprint. In all known cases, this compromise means that smaller campervans lack one or more of: sleeping accommodation; seating/dining accommodation; cooking and food preparation facilities; and toileting facilities. As such, known mini-campervans are a compromise solution both in terms of being an everyday vehicle (because the internal layout does not readily lend itself to everyday use) and as a campervan (because the accommodation is undersized compared with a conventional caravan or campervan). This invention aims to provide a solution to one or more of the above problems.

According to a first aspect of the invention, there is provided a camper vehicle comprising a drivers' seat, a front passengers' seat located adjacent to the drivers' seat, at least one rear passenger seat located behind the drivers' seat and the front passengers' seat, and an inflatable mattress adapted to at least partially overlie and span, when inflated, the drivers' seat, the front passengers' seat and the at least one rear passenger seat, wherein the rear passengers' seat or seats is or are foldable to provide, and wherein the drivers' seat and the front passengers' seat are rotatable such that their seat portions provide, support surfaces for supporting the inflatable mattress.

A second aspect of the invention provides an inflatable mattress suitable for use as a bed in a vehicle, the mattress comprising upper and lower surfaces sealingly interconnected to one another about their peripheries to define an inflatable hollow interior volume therebetween, and further comprising a plurality of ties located within the hollow interior volume, the ties being affixed to, and extending between, the upper and lower surfaces at intervals to maintain the upper surface in a substantially planar configuration when the mattress is inflated.

The invention thus enables a mattress to be readily installed within a relatively small vehicle. The invention is distinguished from known campervan-type vehicles, which to incorporate a bed or sleeping surface, require an elevating roof to accommodate the same. By providing a low-level bed or sleeping surface, the need for a raising roof of the vehicle can be removed, although in many cases, the inflatable, low-level bed of the invention can be used in conjunction with a conventional, high-level bed to increase the sleeping accommodation of the vehicle.

Suitably, the invention is made possible by the fact that the front seats rotate enabling their seat portions to be used to support the mattress, with their back portions rotated out of the way to provide a relatively large, unobstructed area into which the mattress can be placed.

Suitably, the front seats can rotate through substantially 90 degrees such that their back portions face outwardly, i.e. against the vehicle's front doors, thus providing a relatively wide area between the seat backs, between which the mattress can be accommodated. In addition, by rotating the front seats through substantially 90 degrees, the length of the mattress, in many cases, the distance between the dashboard and the rear edge of the rear seat(s) can be maximised.

In an alternative embodiment of the invention, the front seats are suitably rotated through substantially 180 degrees. Such a configuration suitably enables the width of the mattress to be wider in the vicinity of the front seats, although the presence of the front seat's backs against the dashboard of the vehicle can shorten the length of the mattress, unless it is extended rearwardly to counteract this.

In order that the front seats of the vehicle can rotate, certain modifications to the vehicle may be necessary, including the provision of lockably rotatable seat mountings for the front seats, and the lowering of obstructions, such as the vehicle's handbrake lever, which might otherwise interfere with the rotation of, say, the driver's seat. Such modifications can lead to increases in the vehicles weight, which might adversely affect its crashworthiness and type approval. However, by providing an inflatable mattress, the provision of mattress support boards, that are commonly found in campervans or caravans, which are used to enable mattresses to span gaps in support structures, can be removed. Thus, the use of an inflatable mattress suitably provides a number of advantages, including a reduction in weight and ease of stowage when not in use (the mattress can be deflated and rolled up for stowage).

Surprisingly, an inflatable mattress has been found to be sufficiently rigid that it does not need a structural support system, e.g. support boars, to be useable as a bed surface. Conventional wisdom in the art points towards providing boards that are placed atop the seats prior to installing a mattress, or else when a person sits on the bed, it sags into the gaps between the underlying seats, giving rise to an uncomfortable sleeping experience. However, the invention utilities an inflatable mattress, which seems to overcome this problem.

The inflatable mattress suitably comprises an upper wall, a lower walls and a peripheral side wall together defining a sealed, hollow interior volume which can be pressurised by a fluid, for example, by compressed air. The compressed air, where used, can be provided by an air compressor, e.g. a 12V DC air compressor that can be powered by the vehicle's battery or a supplementary battery therefor. The mattress suitably inflates to a pressure that renders it relatively stiff, so that it doesn't sag into the gaps between the seats, in use, but which is also sufficiently soft to provide a comfortable sleeping surface. An inflation pressure of substantially 41 kPa (6psi) has been found to meet these competing requirements.

Inflatable mattresses are conventionally formed from a number of interconnected tubes arranged in a serpentine, or parallel arrangement, cf. a conventional airbed or Li-Lo^{RTM}, such that the sleeping surface is undulating. This is an undesirable configuration from a comfort perspective, and can make it difficult to turn in one's sleep. A preferred embodiment of the invention, by contrast, sees the upper and lower walls of the mattress being interconnected, at intervals, by ties, preferably flexible ties. The ties are suitably substantially inextensible.

Suitably, an inflatable mattress according to the invention comprises a wad of non-woven polymer fibres interposed between the upper and lower surfaces. The wad suitably comprises an upper and a lower surface, which surfaces are at least partially adhered to the interior surfaces of the upper and lower surfaces of the mattress. Such a configuration suitably provides that at least some of the fibres of the wad interconnect the interior of the upper surface of the mattress to the interior of the lower surface of the mattress.

The ties may provide several functions: Firstly, the ties retain the upper and lower surfaces in a substantially parallel and spaced-apart relationship when the mattress is inflated, thus providing a flat, or substantially flat upper sleeping surface for users of the mattress. Secondly, the ties prevent or inhibit the mattress from ballooning, that is to say, adopting a convex or curved upper surface, which could cause users of the mattress to roll to one side when sleeping thereupon. Thirdly, by using flexible, but nevertheless relatively inextensible ties, e.g. ties manufactured from polyamide strands, or apertured webs spanning the upper and lower walls, the hydrostatic forces that the compressed air exerts on the inner surface of the mattress can be resolved as a hoop stress in the skin of the mattress, thereby tensioning the skin and making it more rigid and less susceptible to bending in the plane of the mattress, whilst retaining some compressibility perpendicular to the plane of the mattress, which is desirable to make it more comfortable to lie upon.

Preferred embodiments of the invention shall now be described, by way of example only, with reference to the accompanying drawings in which:
Figure 1 is a perspective, partially cut-away view of the interior of a vehicle in accordance with the invention with the seats in a first configuration;
Figure 2 is a schematic plan view of a vehicle in accordance with the invention, with its seats in a second configuration;
Figure 3 is a perspective, partially cut-away view of the interior of the vehicle of Figure 1 with the seats in a third configuration;
Figure 4 is a perspective, partially cut-away view of the interior of the vehicle of Figure 3 with an inflatable mattress installed above the seats;
Figure 5 is a schematic plan view of the vehicle of Figure 4;
Figure 6 is a perspective view from above and one side of the mattress of Figures 4 and 5;
Figure 7 is a perspective view from below and one side of the mattress of Figures 4 and 5;
Figure 8 is a schematic, partial cross-section of the mattress of Figure 6 on IIX-IIX of Figure 4;
Figure 9 is a perspective, partially cut-away view of a first alternative internal structure for the mattress of Figures 4 to 7; and
Figure 10 is a perspective, partially cut-away view of a second alternative internal structure for the mattress of Figures 4 to 7.

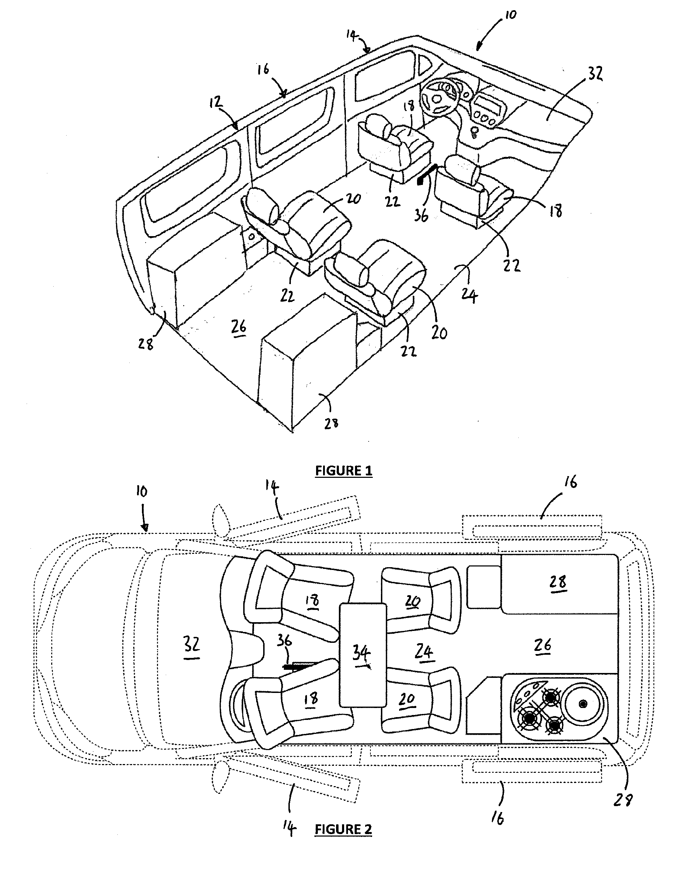

In Figure 1, a vehicle 10 comprises an interior volume 12 that is accessible via hinged driver 14 and passenger doors, and sliding rear doors 16. The doors 14, 16 provide convenient access to the front 18 and rear seats 20 of the vehicle 10, which, all face forwards for use in normal driving. The seats 18, 20 are supported on mounting frames 22 that bolt to the floor 24 of the vehicle 10 in a manner that renders them securely affixed in the event of a road traffic accident. However, the seats 18, 20 are adjustable in rake and position by mounting them on tracks, and by being manufactured in a hingedly connected seat and back configuration, as will be familiar to those skilled in the art.

A rear portion 26 of the vehicle 10 is fitted with accommodation units 28 on either side, into which items such as a fridge, cooker, sink, storage cupboards, chemical toilet, etc. (not shown for clarity) can be installed in accordance with user preferences. Notably, the accommodation units 28 are provided on opposite sides of the rear portion 26 of the vehicle to provide an open walkway extending all the way from the vehicle's tailgate (not shown for clarity) and the dashboard 32, such that passengers are able to walk/move within the vehicle, and/or to provide stowage space for cargo etc.

The front seats 18 are mounted on tracks to enable them to slide forwards and backwards to suit user preferences, but their mounting frames 22 additionally comprise a turntable (not visible) enabling the front seats 18 to be rotated through 180 degrees to face substantially rearward, as shown in Figure 2. In this configuration, a table 34 can be affixed to a mounting pole (not visible) via a connector (not visible) affixed to existing screw holes one of the front seat's mounting frames 22. In such a configuration, the users of the vehicle are able, for example, to eat a meal or socialise, around the table 34, whilst the rear seat passengers are able to access the accommodation units 28 to prepare food and beverages etc. without having to leave the vehicle 10.

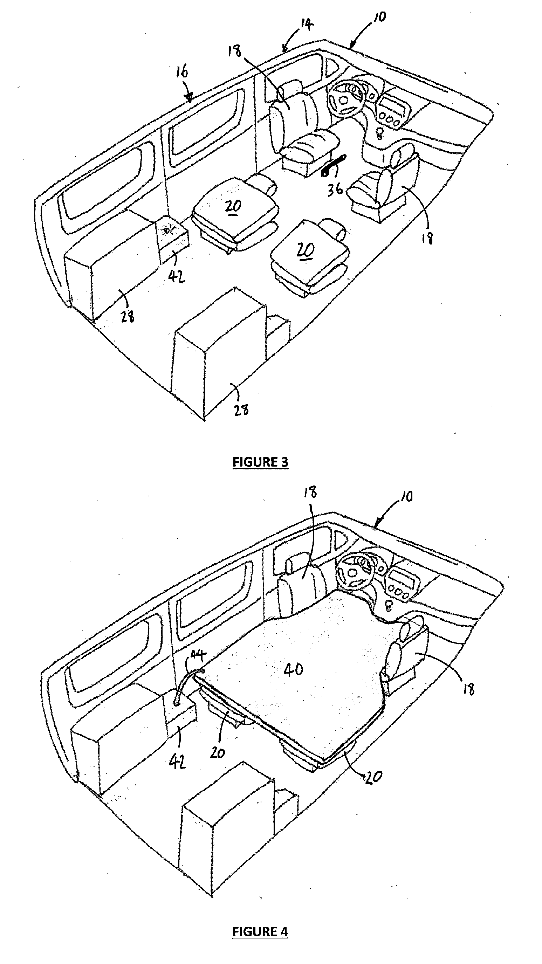

In an alternative seat configuration, as shown in Figure 3, the front seats 18 can be rotated and optionally locked at 90 degrees so that their seat backs are adjacent the doors 14. In a conventional vehicle, the handbrake lever 36 would need to be released to clear the driver's seat as it rotates, but in the vehicle of the invention, the handbrake lever 36 has been lowered to permit the seat to rotate with the handbrake applied. Such a configuration ensures the stability and safety of the vehicle, even when used in a non-driving mode.

In the seat configuration of Figure 3, it will be noted that the rear seats 20 have been folded forward, and their rear edges chocked up by a pivotally connected support leg (not visible) extending below the rear seats 20 such that the upper surface of the folded rear seat backs are substantially horizontal. In such a configuration, an inflatable mattress 40 can be placed over the folded rear seats 20 and the turned-inward front seats 18 and inflated using an on-board air compressor 42 integrated into one of the accommodation units 28.

The air compressor 42 connects to the mattress 40 via an inflation tube 44, and when switched on, inflates the mattress 40 using compressed air. The compressor 42 comprises a selectable non-return valve such that when the pump is switched off, the mattress doesn't deflate. The inflation tube 44 is kept in the outlet port of the compressor 42 to prevent the mattress 40 from deflating. However, the mattress 40 can be deflated at will by disconnecting the inflation tube 44 from the compressor 42 to allow the air within it to escape. The mattress 40 can then be rolled-up and stowed away. To facilitate rapid deflation of the mattress, the inflation tube 44 can be connected to the inlet port of the compressor 42 so that the compressor draws air out of the mattress 40. This greatly speeds-up deflation and striking of the mattress 40 when it is no longer needed.

As can be seen, in particular, in Figures 4, 5 and 6, the mattress 40 has a generally planar upper surface 50, which is relatively flat and comfortable to lie upon. Also, it will be noted that the mattress 40 spans the spaces between the seats 18, 20, but is nevertheless, substantially self-supporting, thereby removing the need to use supplementary supports, such as wooden slats or boards, spanning the gaps between the seats 18, 20.

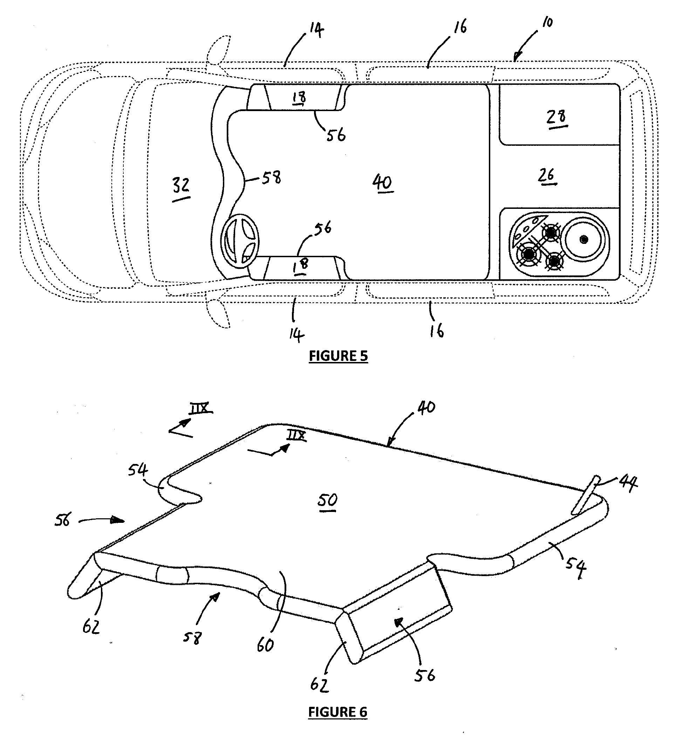

As can be seen more clearly from Figures 6 to 9, the mattress 40 comprises a generally planar upper surface 50 a lower surface 52 and a peripheral side wall 54 that are sealingly bonded to one another, for example, using an adhesive, and which are all manufactured from an elastomeric material, such as sheet rubber. The mattress 40 is appropriately shaped to conform to the plan of the vehicle 10, and, in the illustrated example, comprises side cut-outs 56 to accommodate the front seats' 18 seat backs, and a front cut-out 58 to accommodate a projecting control panel of the vehicle's dashboard 32.

In order that the upper surface 50 of the mattress can be substantially horizontal when deployed within the vehicle, a front portion 60 of the mattress comprises a pair of integrally-formed, inflatable, splayed leg portions 62 that extend downwardly and away from the front portion 60 of the lower surface 52 of the mattress 40. The leg portions 62 engage the seat portions of the front seats 18 and the front portion 60 of the mattress 40 spans the leg portions 62 unsupported therebetween. In order to accomplish this, the mattress 40 needs to be relatively rigid, whilst retaining some softness to make it comfortable for a user to lie upon it.

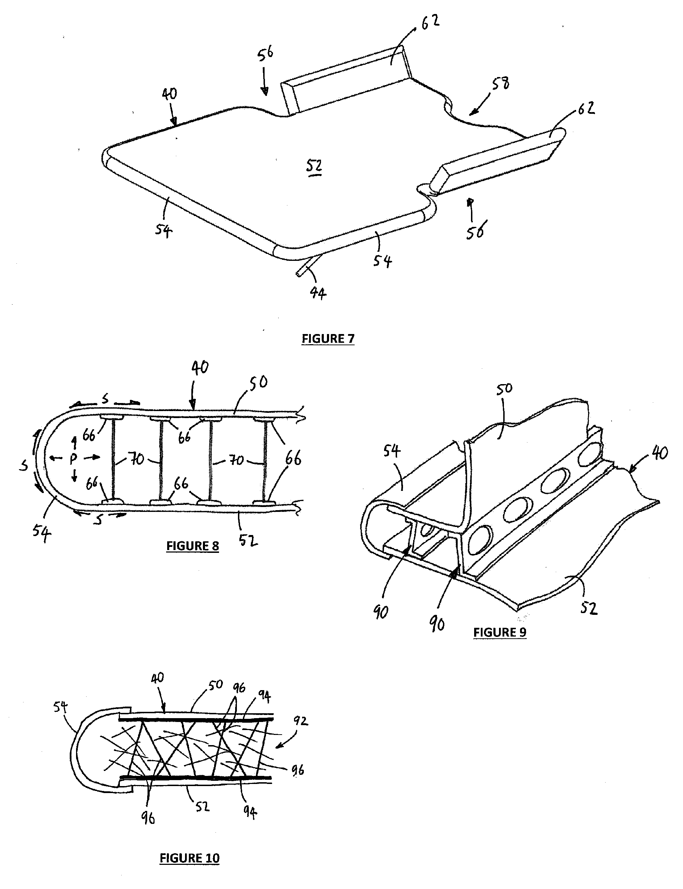

This is accomplished by virtue of an internal structure of the mattress 40, which is shown schematically in Figure 8, and in an alternative embodiment, in Figure 9.

The hollow interior volume 68 of the mattress 40 is inflated using compressed air, and the upper 50 and lower surfaces 50 are maintained at a desired spacing by a plurality of ties 70 that interconnect the interior surfaces of the upper 50 and lower walls 52 of the mattress 40 at intervals. As shown in Figure 8, the ties 70 comprise short lengths of polymer cord glued to the upper and lower surfaces of the mattress via pads 66 that are glued in place as the mattress 40 is fabricated. The ties 70 serve to prevent the mattress from ballooning, and also to resolve the hydrostatic pressure P within the mattress 40 into a tensioning hoop stress S in the skin thereof. Such a configuration places the upper 50 and lower surfaces 52 of the mattress in tension, thereby providing a relatively rigid beam structure that is able to relatively rigidly span the gap between the leg portions 62.

A first alternative configuration is shown in Figure 9, whereby the tie cords shown in Figure 8 are replaced, or supplemented, by apertured, flexible webs 90 spanning the upper 50 and lower surfaces 52 of the mattress 40. Such a configuration allows air to move freely within the mattress 40, whilst maintaining the upper 50 and lower surfaces 52 at a desired spacing.

A second alternative configuration is shown in Figure 10, whereby the interiors of the upper 50 and lower 52 surfaces of the mattress 40 are interconnected, at intervals, by fibres of a sheet of non-woven polyamide wadding 92. The wadding 92 is glued 94 to the upper 50 and lower 52 surfaces of the mattress 40 internally, such that at least some of the individual fibres 96, thereof, interconnect the said surfaces 50, 52. Such a configuration allows air to move freely within the mattress 40, whilst maintaining the upper 50 and lower surfaces 52 at a desired spacing when the mattress 40 is inflated, but allows the mattress 40 to remain flexible and rollable/foldable when it is deflated. In other words, the wadding 92 is able to collapse and flex when the mattress 40 is deflated.

It will be appreciated that whilst the upper surface 50 of the mattress 40 is desirably flat to provide a comfortable sleeping surface, the lower surface could be contoured to conform to the shape of the underlying support structures, e.g. the seats and other support surfaces. Nevertheless, by manufacturing the mattress so that the majority of it is of substantially the same thickness, rolling, folding and storing the mattress is facilitated because a contoured surface could lead to rucks, folds and creases in the mattress when it is deflated.

The invention is not restricted to the details of the foregoing embodiments, which are merely exemplary of the invention. For example, the shape and configuration of the vehicle, the mattress and the seats could be altered without departing from the scope of the invention. Other minor details could be changed, added or omitted, such as the lowering of the handbrake, the provision of a fluid control valve in the mattress/inflation tube, rather than relying on control devices within the air compressor etc.

The following statements are not the claims, but relate to various embodiments of the invention:
Statement 1. A camper vehicle comprising a drivers' seat, a front passengers' seat located adjacent to the drivers' seat, at least one rear passenger seat located behind the drivers' seat and the front passengers' seat, and an inflatable mattress adapted to at least partially overlie and span, when inflated, the drivers' seat, the front passengers' seat and the at least one rear passenger seat, wherein the rear passengers' seat or seats is or are foldable to provide, and wherein the drivers' seat and the front passengers' seat are rotatable such that their seat portions provide, support surfaces for supporting the inflatable mattress.
Statement 2. A camper vehicle according to statement 1, wherein seat portions of the front seats provide a support surface for the inflatable mattress.
Statement 3. A camper vehicle of statement 1 or statement 2, wherein the front seats are rotatable through substantially 90 degrees such that their back portions face outwardly, that is to say, towards the vehicle's front doors.
Statement 4. A camper vehicle of statement 1 or statement 2, wherein the front seats are rotatable through substantially 180 degrees such that their back portions face forwards, that is to say, towards the vehicle's dashboard.
Statement 5. A camper vehicle of any preceding statement, wherein the front seats are mounted for rotation on turntables.
Statement 6. A camper vehicle of statement 5, wherein the turntable is lockable at any one or more desired positions.
Statement 7. A camper vehicle of any preceding statement comprising a handbrake actuator located between the front seats, wherein the level of the handbrake actuator, when in an engaged position, is lower than the level of the underside either or both of the rotatable front seats to permit either or both of the rotatable front seats to rotate unobstructed by the handbrake actuator when the handbrake is applied.
Statement 8. A camper vehicle of any preceding statement, comprising a pair of spaced-apart rear seats.
Statement 9. A camper vehicle of any preceding statement, wherein the or each rear seat comprises a pivotally connected support leg for propping the rear seat or seats such that the upper surface or surfaces of the rear seat backs, when folded, are substantially horizontal.
Statement 10. A camper vehicle of any preceding statement, further comprising a stow-away table.
Statement 11. A camper vehicle of statement 10, wherein a surface of the table is supported on a mounting pole via a connector affixed to existing screw holes of one of the front seat's mounting frames.
Statement 12. A camper vehicle of any preceding statement, further comprising an air compressor for inflating and/or deflating the mattress.
Statement 13. A camper vehicle of statement 12, wherein the compressor comprises a 12V DC air compressor powered by the vehicle's battery or a supplementary battery therefor.
Statement 14. A camper vehicle of statement 12 or statement 13, wherein the inflatable mattress comprises an inflation tube that is detachably connectable to the air compressor.
Statement 15. A camper vehicle of statement 14, wherein any one or more of the compressor, mattress and inflation tube comprises a valve.
Statement 16. A camper vehicle of any of statements 12 to 15, wherein the compressor is reversible to facilitate deflating the mattress.
Statement 17. A camper vehicle of any preceding statement, wherein a rear portion of the vehicle comprises an accommodation unit.
Statement 18. A camper vehicle of statement 17, comprising an accommodation unit located on either side of the rear portion of the vehicle with a walkway therebetween.
Statement 19. A camper vehicle of statement 18, wherein the walkway extends substantially from the vehicle's tailgate to the dashboard.
Statement 20. A camper vehicle of any of statements 17, 18 or 19, wherein the accommodation unit or units comprise any one or more of the group comprising: a refrigerator; a cooker; a sink; a storage cupboard; and a toilet.
Statement 21. An inflatable mattress suitable for use as a bed in a vehicle, the mattress comprising upper and lower surfaces sealingly interconnected to one another about their peripheries to define an inflatable hollow interior volume therebetween, and further comprising a plurality of ties located within the hollow interior volume, the ties being affixed to, and extending between, the upper and lower surfaces at intervals to maintain the upper surface in a substantially planar configuration when the mattress is inflated.
Statement 22. An inflatable mattress of statement 21, wherein the ties are substantially inextensible.
Statement 23. An inflatable mattress of statement 21 or statement 22, wherein the ties comprise lengths of polymer cord affixed to the upper and lower surfaces of the mattress.
Statement 24. An inflatable mattress of statement 23, wherein the polymer cords comprise polyamide strands.
Statement 25. An inflatable mattress of any of statements 21 to 24, wherein the ties comprise a wad of non-woven polymer fibres interposed between the upper and lower surfaces, the wad having upper and lower surfaces at least partially adhered to the interior surfaces of the upper and lower surfaces of the mattress such that at least some of the fibres interconnect the interior of the upper surface of the upper surface of the mattress to the interior of the lower surface of the lower surface of the mattress.
Statement 26. An inflatable mattress of statement 21, wherein the ties comprise one or more flexible, apertured webs spanning the upper and lower surfaces of the mattress.
Statement 27. An inflatable mattress of any of statements 21 to 26, comprising a generally planar upper surface.
Statement 28. An inflatable mattress of any of statements 21 to 27, further comprising a peripheral side wall sealingly bonded around the peripheries of the upper and lower surfaces to define the hollow interior volume.
Statement 29. An inflatable mattress of any of statements 21 to 28, wherein any one or more of the upper surface, lower surface and peripheral side wall are manufactured from sheet rubber.
Statement 30. An inflatable mattress of any of statements 21 to 29, wherein the periphery of the mattress is shaped to conform to the plan of the vehicle lying in the plane of the mattress when installed.
Statement 31. An inflatable mattress of statement 30, comprising side cut-outs for accommodating the front seats' seat backs.
Statement 32. An inflatable mattress of statement 30 or statement 31, comprising a front cut-out for accommodating a projecting control panel of the vehicle's dashboard.
Statement 33. An inflatable mattress of any of statements 21 to 32, further comprising an integrally-formed, inflatable, leg portion extending downwardly from the lower surface of the mattress.
Statement 34. An inflatable mattress of statement 33, comprising a pair of spaced apart, splayed leg portions located at, or towards a front portion of the mattress for engaging the seat portions of the front seats of the vehicle, in use, and wherein the said front portion of the mattress spans the gap between the leg portions.
Statement 35. An inflatable mattress of any of statements 21 to 34, comprising a contoured lower surface.
Statement 36. An inflatable mattress of any of statements 21 to 35, wherein the mattress is inflatable to an inflation pressure of substantially 41 kPa.
Statement 37. A vehicle according to any of statements 1 to 20, comprising a mattress according to any of statements 21 to 36.
Statement 38. A vehicle or mattress substantially as hereinbefore described, with reference to, and as illustrated in, the accompanying drawings.

## Claims

1. A camper vehicle comprising a drivers' seat, a front passengers' seat located adjacent to the drivers' seat, at least one rear passenger seat located behind the drivers' seat and the front passengers' seat, and an inflatable mattress adapted to at least partially overlie and span, when inflated, the drivers' seat, the front passengers' seat and the at least one rear passenger seat, wherein the rear passengers' seat or seats is or are foldable to provide, and wherein the drivers' seat and the front passengers' seat are rotatable such that their seat portions provide, support surfaces for supporting the inflatable mattress.

2. A camper vehicle according to claim 1, wherein seat portions of the front seats provide a support surface for the inflatable mattress and optionally where the front seats are rotatable through substantially 90 degrees such that their back portions face outwardly, that is to say, towards the vehicle's front doors, or wherein the front seats are rotatable through substantially 180 degrees such that their back portions face forwards, that is to say, towards the vehicle's dashboard, and wherein the front seats are optionally mounted for rotation on optionally locakable turntables.

3. A camper vehicle as claimed in any preceding claim comprising a handbrake actuator located between the front seats, wherein the level of the handbrake actuator, when in an engaged position, is lower than the level of the underside either or both of the rotatable front seats to permit either or both of the rotatable front seats to rotate unobstructed by the handbrake actuator when the handbrake is applied.

4. A camper vehicle as claimed in any preceding claim, comprising a pair of spaced-apart rear seats and wherein the or each rear seat comprises a pivotally connected support leg for propping the rear seat or seats such that the upper surface or surfaces of the rear seat backs, when folded, are substantially horizontal.

5. A camper vehicle as claimed in any preceding claim, further comprising a stow-away table, in which a surface of the table is supported on a mounting pole via a connector affixed to existing screw holes of one of the front seat's mounting frames.

6. A camper vehicle as claimed in any preceding claim, further comprising an air compressor for inflating and/or deflating the mattress.

7. A camper vehicle as claimed in claim 6, wherein the compressor comprises a 12V DC air compressor powered by the vehicle's battery or a supplementary battery therefor and wherein the inflatable mattress comprises an inflation tube that is detachably connectable to the air compressor, and wherein any one or more of the compressor, mattress and inflation tube optionally comprises a valve.

8. A camper vehicle as claimed in any of claims 6 or 7, wherein the compressor is reversible to facilitate deflating the mattress.

9. A camper vehicle as claimed in any preceding claim, wherein a rear portion of the vehicle comprises an accommodation unit, and wherein an accommodation unit is located on either side of the rear portion of the vehicle with a walkway therebetween, the walkway extending substantially from the vehicle's tailgate to the dashboard, and wherein the accommodation unit or units comprise any one or more of the group comprising: a refrigerator; a cooker; a sink; a storage cupboard; and a toilet.

10. A camper vehicle as claimed in any preceding claim, wherein the inflatable mattress comprises upper and lower surfaces sealingly interconnected to one another about their peripheries to define an inflatable hollow interior volume therebetween, and further comprising a plurality of ties located within the hollow interior volume, the ties being affixed to, and extending between, the upper and lower surfaces at intervals to maintain the upper surface in a substantially planar configuration when the mattress is inflated.

11. A camper vehicle of claim 10, wherein the ties are substantially inextensible and comprise lengths of polymer cord, such as polyamide strands, affixed to the upper and lower surfaces of the mattress, or wherein the ties comprise a wad of non-woven polymer fibres interposed between the upper and lower surfaces, the wad having upper and lower surfaces at least partially adhered to the interior surfaces of the upper and lower surfaces of the mattress such that at least some of the fibres interconnect the interior of the upper surface of the upper surface of the mattress to the interior of the lower surface of the lower surface of the mattress, or wherein the ties comprise one or more flexible, apertured webs spanning the upper and lower surfaces of the mattress.

12. The camper vehicle of any preceding claim, wherein the inflatable mattress comprises a generally planar upper surface and a peripheral side wall sealingly bonded around the peripheries of the upper and lower surfaces to define the hollow interior volume, and wherein the periphery of the mattress is shaped to conform to the plan of the vehicle lying in the plane of the mattress when installed.

13. The camper vehicle of claims 12, wherein the inflatable mattress comprises any one or more of the group comprising: side cut-outs for accommodating the front seats' seat backs; a front cut-out for accommodating a projecting control panel of the vehicle's dashboard; an integrally-formed, inflatable, leg portion extending downwardly from the lower surface of the mattress; and a pair of spaced apart, splayed leg portions located at, or towards a front portion of the mattress for engaging the seat portions of the front seats of the vehicle, in use, and wherein the said front portion of the mattress spans the gap between the leg portions.

14. The camper vehicle of any preceding claim, wherein the inflatable mattress comprises a contoured lower surface.

15. An inflatable mattress as claimed in any of claims 21 to 35, wherein the mattress is inflatable to an inflation pressure of substantially 41 kPa.
